# EUROPÄISCHE PATENTSCHRIFT

(11) **EP 1 131 229 B1**
(45) Veröffentlichungstag und Bekanntmachung des Hinweises auf die Patenterteilung: **07.04.2004**
(21) Anmeldenummer: 00949455.0
(22) Anmeldetag: 04.08.2000
(51) Int. Cl.: B60R 21/16, B60R 21/20

(54) **AIRBAGEINRICHTUNG AN EINEM LENKRAD EINES FAHRZEUGS**
AIRBAG SYSTEM IN A STEERING WHEEL OF A MOTOR VEHICLE
SYSTEME DE COUSSIN GONFLABLE SITUE SUR LE VOLANT D'UN VEHICULE

(30) Priorität: 17.09.1999 DE 19944572; 22.10.1999 DE 19951029
(43) Veröffentlichungstag der Anmeldung: 12.09.2001
(73) Patentinhaber: Volkswagen Aktiengesellschaft, 38436 Wolfsburg (DE)
(72) Erfinder: WOHLLEBE, Thomas, D-38110 Braunschweig (DE); SINNHUBER, Ruprecht, D-38518 Gifhorn (DE)
(74) Vertreter: Liebl, Thomas, Dipl.-Ing.
(86) Internationale Anmeldenummer: PCT/EP2000/007588
(87) Internationale Veröffentlichungsnummer: WO 2001/021450

(56) Entgegenhaltungen:
- EP-A- 0 872 401
- WO-A-00/46077
- DE-A- 3 019 368
- DE-A- 3 145 731
- DE-A- 19 703 470
- DE-A- 19 742 506
- DE-A- 19 749 914
- DE-A- 19 905 122

## Beschreibung

Die Erfindung betrifft eine Airbageinrichtung an einem Lenkrad eines Fahrzeugs nach dem Oberbegriff des Anspruchs 1.

Eine allgemein bekannte, gattungsgemäße Airbageinrichtung an einem Lenkrad eines Fahrzeugs umfaßt ein Airbagmodul, das in einem mittleren Nabenbereich des Lenkrads angeordnet ist. Das Airbagmodul enthält einen, durch einen Crashsensor aktivierbaren Gasgenerator mit einem Diffusor, an den ein Airbag angeschlossen ist. Zudem weist das Airbagmodul eine in Richtung des Fahrzeuglenkers aufreißbare Airbagklappe auf, durch die der aktivierte Airbag austritt und vor dem Lenkrad entfaltbar ist.

Bei einer solchen Airbageinrichtung wird der Airbag unmittelbar in Richtung auf den Oberkörper des Fahrzeuglenkers entfaltet und gefüllt, wodurch aufgrund des schnellen Aufblasvorgangs und des Fülldrucks sowie von der Airbagklappe eine Aggressivität mit der Möglichkeit einer Beeinträchtigung des Fahrzeuglenkers ausgehen kann. Diese Aggressivität kann noch erhöht sein, wenn ein Fahrzeuglenker zu dicht vor dem Lenkrad sitzt, z. B. bei kleinen Personen oder bei einer nicht üblichen Sitzhaltung (out of position).

Aus der gattungsgemäßen EP 0872401 A2 ist eine Airbageinrichtung an einem Lenkrad eines Fahrzeugs bekannt, bei der eine im Querschnitt L-förmig ausgebildete Nabenabdeckung durch den sich entfaltenden Airbag vom zentralen Nabenbereich weg in Richtung auf den Fahrzeuginsassen zu abhebbar ist, so dass der Airbag durch die dadurch freigegebene Airbagaustrittöffnung im wesentlichen um den oberen Schenkel der Abdeckung herum in Richtung auf den Fahrzeuginsassen zu aufblasbar ist. Mit einem derartigen Aufbau soll eine Abdeckung geschaffen werden, die nicht zu weit in Richtung auf den Fahrzeuginsassen zu verlagert wird, wobei eine derartige Airbagabdeckung im Nabenbereich jedoch insgesamt relativ aufwendig und bezüglich der Kinematik kompliziert ausgebildet ist.

Als Stand der Technik gemäß Art. 54 (3) und (4) EPÜ ist die WO 00/46077 bekannt, die einen im Lenkradnabenbereich untergebrachten Airbag aufweist. Bei dieser Airbageinrichtung ist stets eine zentral in der Nabenoberseite ausgebildete Haupt-Airbagöffnung als erste Öffnung vorgesehen, durch die hindurch der Airbag im Falle einer normalen Sitzposition des Fahrzeuginsassen aufblasbar ist. Für den Fall, dass sich ein Fahrzeuginsasse außerhalb einer normalen Sitzposition, d. h. in einer sogenannten out-offposition-Situation befindet, wird die normale Entfaltung des Airbags durch die erste Öffnung hindurch beeinträchtigt, so dass der Airbag wenigstens zum Teil durch seitlich am Nabengehäuse ausbildbare Ausweichöffnungen austreten kann, wobei sich dieser seitlich austretende Airbagteil hier dann gerade nicht mehr in Richtung auf den Fahrzeuginsassen zu entfalten soll, um die Aggressivität in Richtung auf den Fahrzeuginsassen zu verringern.

Aufgabe der Erfindung ist es, eine alternative, einfach aufgebaute Airbageinrichtung an einem Lenkrad eines Fahrzeugs zu schaffen, mit der eine mögliche Aggressivität auf einfache Weise reduziert wird.

Diese Aufgabe wird mit den Merkmalen des Anspruchs 1 gelöst.

Gemäß Anspruch 1 ist das Airbagmodul mit dem Lenkrad mitdrehend zentral im Bereich der Nabe und/oder der Lenksäule angeordnet. Wenigstens eine Austrittöffnung für einen zugeordneten Airbag ist am Airbagmodul seitlich und radial gerichtet am nicht ausgelösten Airbagmodul angeordnet, wobei eine zugeordnete Airbagklappe und/oder die Airbagfaltung und/oder die Airbagform so angeordnet und dimensioniert sind, daß der Airbag bei der Entfaltung nach einem anfänglichen radialen Austritt durch den Kranzbereich des Lenkrads hindurch in Richtung auf einen Fahrzeuglenker gelenkt wird.

Damit wird erreicht, daß der Airbag ausweicht, wenn sich eine Person sehr dicht vor dem Lenkrad befindet. Dabei entfaltet sich der Airbag in Richtung mit dem geringsten Widerstand, d. h. nicht nur vor dem Lenkrad sondern teilweise auch dahinter. Der Airbag tritt erfindungsgemäß nicht an der Vorderseite der Nabe direkt aus sondern seitlich, so daß er nicht unmittelbar und direkt auf einen Fahrzeuglenker hin gefüllt wird. Die Vorderseite der Nabe bleibt dabei fest und kann z. B. ein großes Markenemblem enthalten und/oder als energieabsorbierendes Polster ausgeführt sein. Dieses Polster bietet einen gewissen Schutz im Falle einer Multikollision. Die Lenkradnabe soll insgesamt jedoch möglichst klein sein, damit eine Entfaltung des Airbags durch den Kranzbereich hindurch nicht behindert wird. Zudem kann von der oder den Airbagklappen keine Aggressivität für einen Fahrzeuglenker ausgehen, da sie seitlich öffnen, auch wenn der Fahrzeuglenker sehr dicht am Lenkrad sitzt.

Die Öffnungskinematik der einen oder mehreren Airbagklappen soll bevorzugt so sein, daß die Klappen den Airbag in die gewünschte Richtung (zuerst seitlich und dann durch den Kranzbereich hindurch) lenken.

In einer einfachen Ausführungsform umfaßt die Airbageinrichtung einen einzigen Airbag, der im gefüllten Zustand ausgehend von einem radial gerichteten Teilbereich, mit dem er radial aus dem Airbagmodul austritt, weiter eine bogenförmige Gestalt aufweist, die den gesamten Lenkradbereich und insbesondere die Nabe abdeckt. Dieser einzige Airbag wird dabei zwischen benachbarten Speichen und dem Kranz des Lenkrads bei der Aktivierung hindurchgeschossen.

In einer weiteren, bevorzugten Ausführungsform ist ein Airbagmodul mit wenigstens zwei Airbags mit je einer zugeordneten Austrittöffnung und einer Airbagklappe vorgesehen. Vorzugsweise werden (bei gerade gestelltem Lenkrad) ein Oberteil-Airbag und ein Unterteil-Airbag verwendet. Der Oberteil-Airbag wird bei einem Zwei-Speichen-Lenkrad oberhalb und der Unterteil-Airbag unterhalb von Speichen im Kranzbereich des Lenkrads hindurchgeschossen.

Um eine gute Schutzfunktion auch dann zu erreichen, wenn das Lenkrad bei einer Kurvenfahrt nicht gerade gestellt ist, wird vorgeschlagen, die beiden Airbags im gefüllten Zustand vor dem Lenkrad überlappend auszuführen.

Die beiden Airbags können dabei mit einem einzigen Generator gefüllt werden, wobei ein Doppeldiffusor verwendet wird, der je einen Einblasmund für die beiden Airbags aufweist. Es ist jedoch auch eine Ausführung mit zwei Gasgeneratoren, denen je ein Airbag zugeordnet ist, möglich. Je nach den Gegebenheiten ist auch eine Anordnung mit einem Stufengenerator verwendbar. Durch die Verwendung von zwei Gasgeneratoren oder einem Stufengenerator ist auch eine gesteuerte, von individuellen Parametern abhängige Entfaltung der beiden Airbags möglich. Eine noch variablere Entfaltung der beiden Airbags ermöglicht der Einsatz von zwei oder mehr Stufengeneratoren.

Je nach den Gegebenheiten des aktuellen Fahrzeuglenkers und des Unfallhergangs kann die Schutzfunktion durch Variation des Füllgrads und des Zeitablaufs optimiert werden. Dazu können unfallbedingte Parameter, wie Aufprallrichtung, Geschwindigkeit, ggf. ein Sekundäraufprall, etc. sowie individuelle Daten des Fahrzeuglenkers, wie Gewicht, Größe, Sitzposition, etc. erfaßt und steuerungstechnisch ausgewertet werden.

Das Aufblasverhalten in die o. g. gewünschte Richtung kann vorteilhaft auch durch eine unsymmetrische Faltung des oder der Airbags in der Ausgangslage erreicht werden.

Besonders günstige kinematische Verhältnisse ergeben sich, wenn das Airbagmodul gegenüber der Kranzebene des Lenkrads vom Fahrzeuglenker weg versetzt liegt. Dabei wird der oder werden die Airbags geometrisch günstig zwischen dem Lenkradkranz und benachbarten Speichen hindurchgeschossen, wobei eine Mehrzahl geeigneter Lenkradausbildungen möglich sind:

Für einen möglichst großen Durchtrittraum zwischen Lenkradkranz, Speichen und Nabe eignen sich besonders Zwei-Speichen-Lenkräder, bei denen zwei Speichen radial gegenüberliegend den Lenkradkranz und die Nabe verbinden. Auch Vier-Speichen-Lenkräder sind geeignet, wenn jeweils zwei Speichen eng beieinander liegen. Bei einem einteiligen Airbag kann auch ein Drei-Speichen-Lenkrad verwendet werden, wenn ein Durchtrittraum zwischen zwei Speichen möglichst groß belassen ist. Durch das mit dem Lenkrad mitdrehende Airbagmodul ist die Lage zwischen den Speichen und der oder den Airbagaustrittöffnungen festgelegt und ständig beibehalten.

In einer besonders bevorzugten Ausführungsform kann die Lenkradnabe zudem als an sich bekannter Stülptopf ausgebildet sein, in den das Airbagmodul integriert ist. Dabei kann der Stülptopf zusätzlich Aufprallenergie absorbieren und bildet zugleich ein geeignetes Behältnis für die Einzelteile des Airbagmoduls. Ein solches Lenkrad ist insbesondere bei Verwendung eines einteiligen Airbags besonders preisgünstig bei guter Schutzfunktion herstellbar.

Anhand einer Zeichnung wird die Erfindung näher erläutert.

Es zeigen:
- Fig. 1: eine Draufsicht auf ein Zwei-Speichen-Lenkrad mit zwei gefüllten Airbags,
- Fig. 2: eine Seitenansicht der Anordnung nach Fig. 1,
- Fig. 3: einen Schnitt durch die Lenkradnabe entlang der Linie A-A im Ruhezustand der Airbags,
- Fig. 4: eine ähnliche Darstellung mit einer alternativen Airbagklappenanordnung,
- Fig. 5: eine ähnliche Schnittdarstellung für eine Ausführungsform mit nur einem Airbag entsprechend Fig. 7,
- Fig. 6: eine Darstellung einer Airbagentfaltung bei einem zu dicht am Lenkrad sitzenden Fahrzeuglenker,
- Fig. 7: eine Ausführungsform entsprechend Fig. 2, jedoch nur mit einem Airbag,

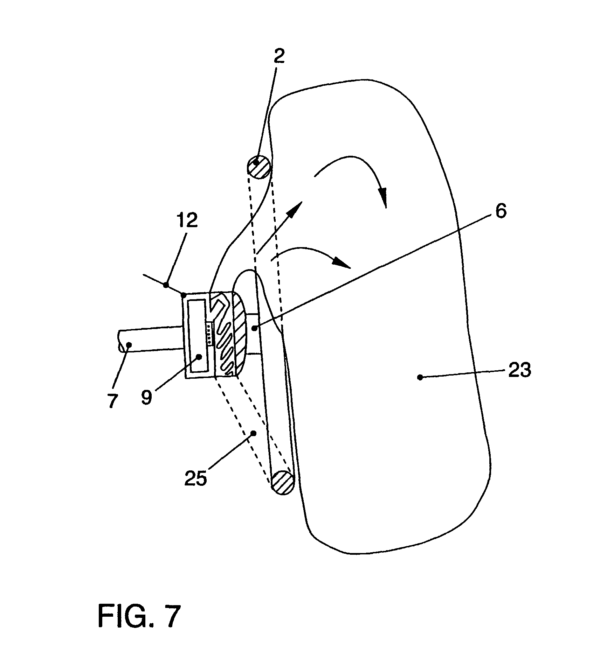

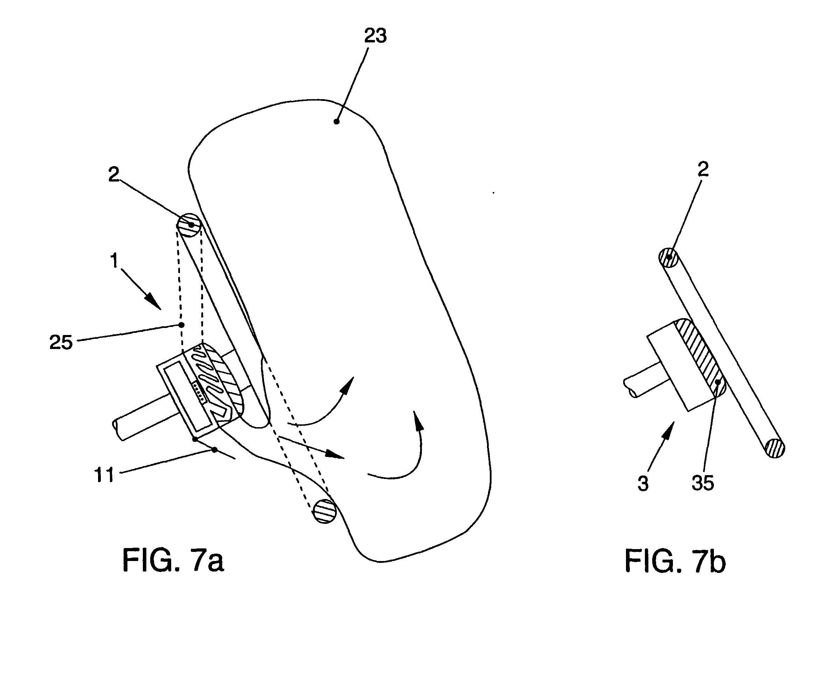

- Fig. 7 a: wie Fig. 7, jedoch andere Ausführungsform
- Fig. 7 b: wie Fig. 7 a, jedoch mit nicht aktiviertem Airbag und mit energieabsorbierendem Polster

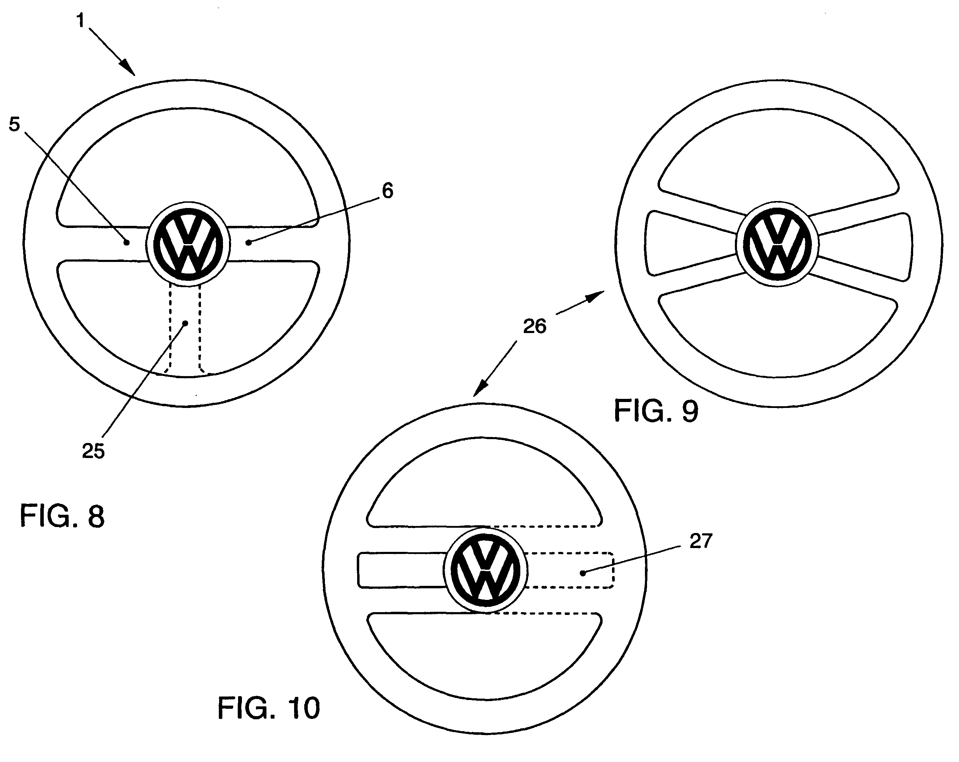

- Fig. 8, 9, 10: unterschiedliche geeignete Lenkradausbildungen,

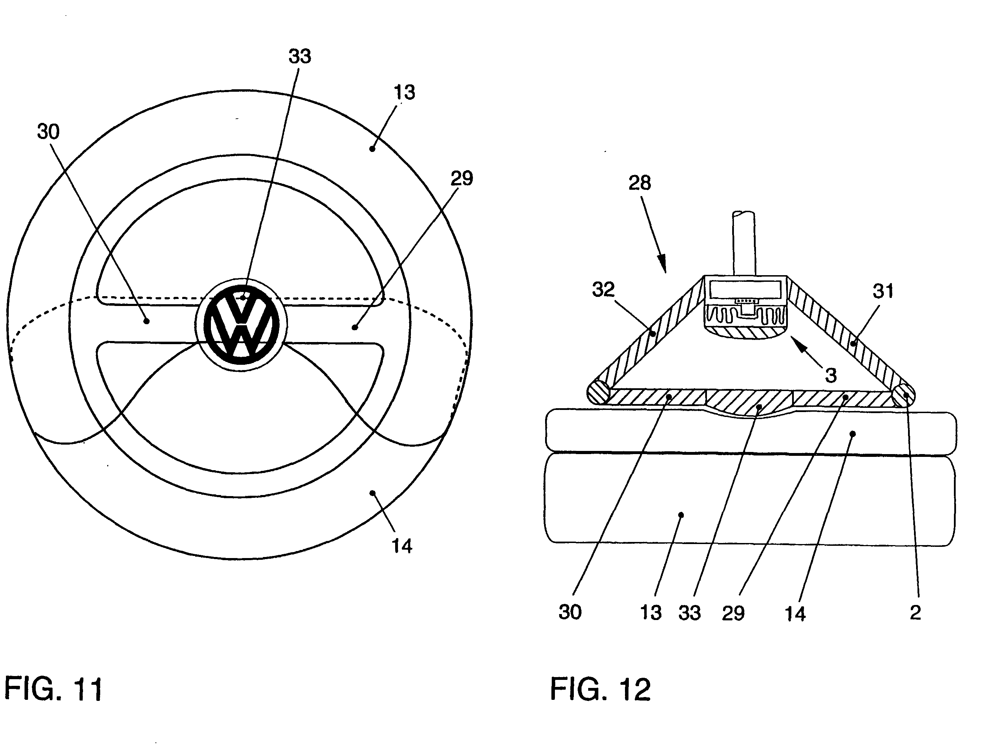

- Fig. 11, 12, 13: unterschiedliche Ansichten einer Ausführungsform mit einem Speichendreieck und zurückgesetztem Airbagmodul,

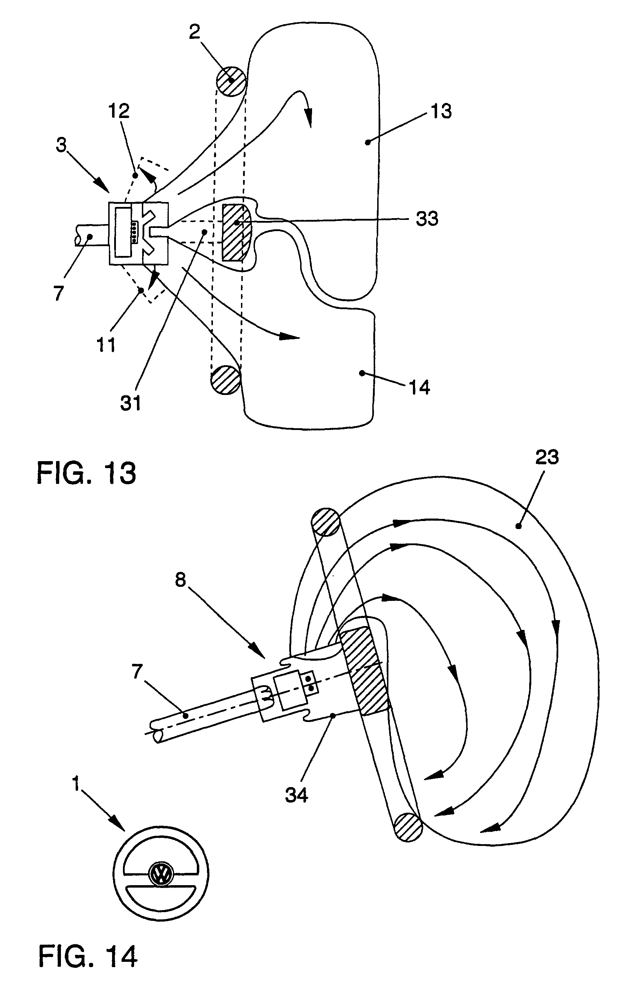

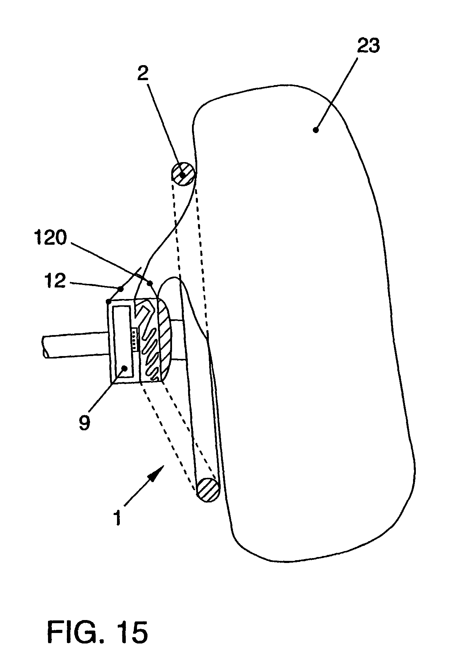

- Fig. 14 Fig. 15: eine Ausführungsform mit einem Stülptopf als Nabe, und eine andere Ausführungsform der Airbagklappe

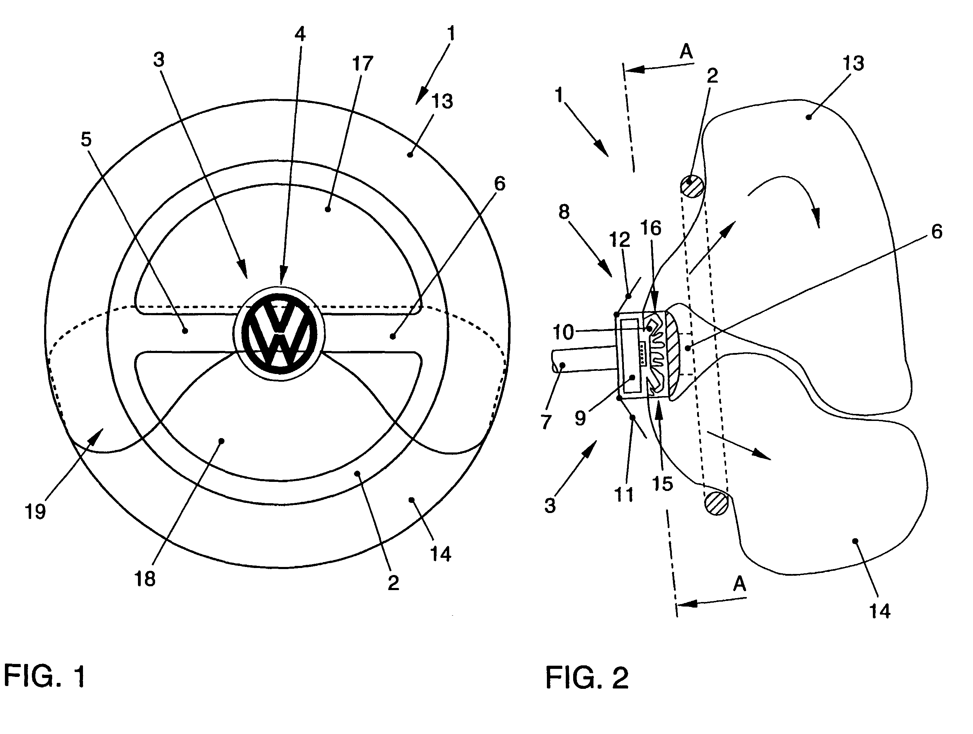

In den Fig. 1 und 2 ist ein Zwei-Speichen-Lenkrad 1 dargestellt mit einem Kranz 2, einer Nabe 3 mit nach vorne weisendem Emblem 4 und zwei gegenüberliegenden Speichen 5, 6.

Wie aus Fig. 2 ersichtlich hat die Nabe 3 Verbindung mit einer Lenksäule 7 und enthält ein mit dem Lenkrad 1 mitdrehendes Airbagmodul 8. Dieses umfaßt einen Generator 9 mit einem Doppeldiffusor 10 sowie seitlich zwei Airbagklappen 11, 12. Die Airbagklappen 11, 12 sind nach vorne geöffnet mit einer Öffnungskinematik dergestalt, daß ein zugeordneter Oberteil-Airbag 13 und Unterteil-Airbag 14, die aus seitlichen Austrittöffnungen entfaltet und jeweils durch einen Bereich 17 oberhalb und einem Bereich 18 unterhalb der Speichen 5, 6 durch den Kranzbereich gelenkt und durchgetreten sind. Dabei überlappen der Oberteil-Airbag 13 und der Unterteil-Airbag 14 im gefüllten Zustand in einem Überlappungsbereich 19 vor dem Lenkrad.

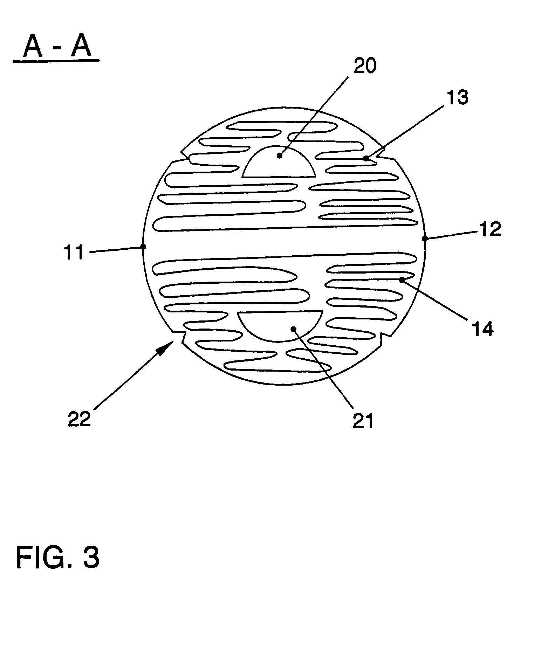

Im Schnitt A-A durch die Nabe 3 gemäß Fig. 3 sind die beiden Ausblasöffnungen 20, 21 des Doppeldiffusors 10 erkennbar. Weiter ist ersichtlich, daß in der dargestellten Bereitschaftsposition der Oberteil-Airbag 13 und Unterteil-Airbag 14 jeweils unsymmetrisch gefaltet sind, um den Durchtrittvorgang zwischen den Speichen 5, 6 und dem Kranz 2 zu lenken und zu begünstigen.

Zudem sind die (noch geschlossenen) seitlichen Airbagklappen 11, 12 erkennbar mit eingekerbten Reißlinien 22, an denen sie durch den Druck der aktivierten Airbags 13, 14 aufreißen.

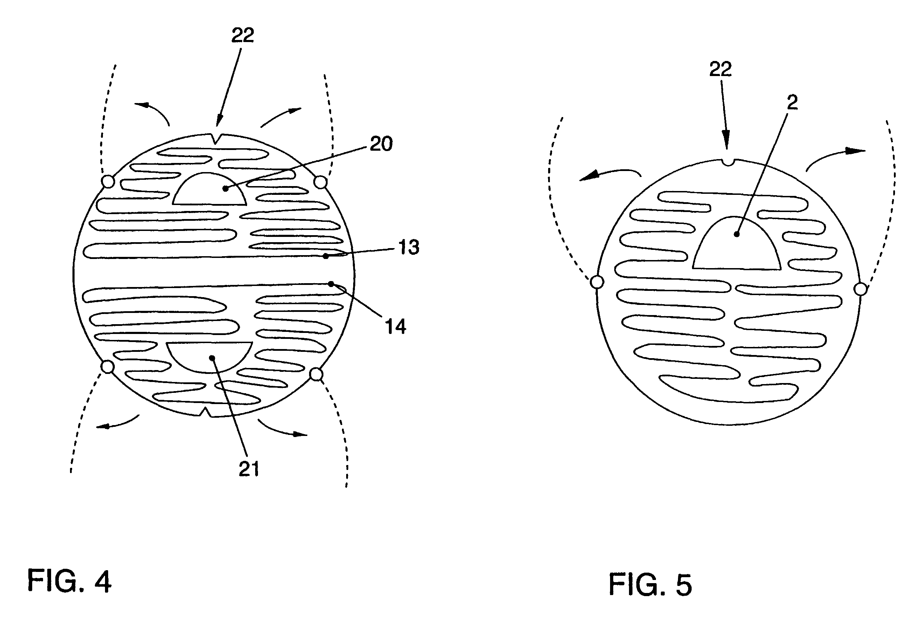

In einer ähnlichen alternativen Ausführungsform nach Fig. 4 sind die Airbagklappen 11, 12 zweigeteilt und die Reißlinien 22 entsprechend an anderer Stelle angeordnet. (Die geöffneten Airbagklappen 11, 12 sind strichliert eingezeichnet.)

In Fig. 5 ist das gleiche Prinzip wie in Fig. 4 für einen einteiligen Airbag 23 gezeigt, wie er in Fig. 7 verwendet ist.

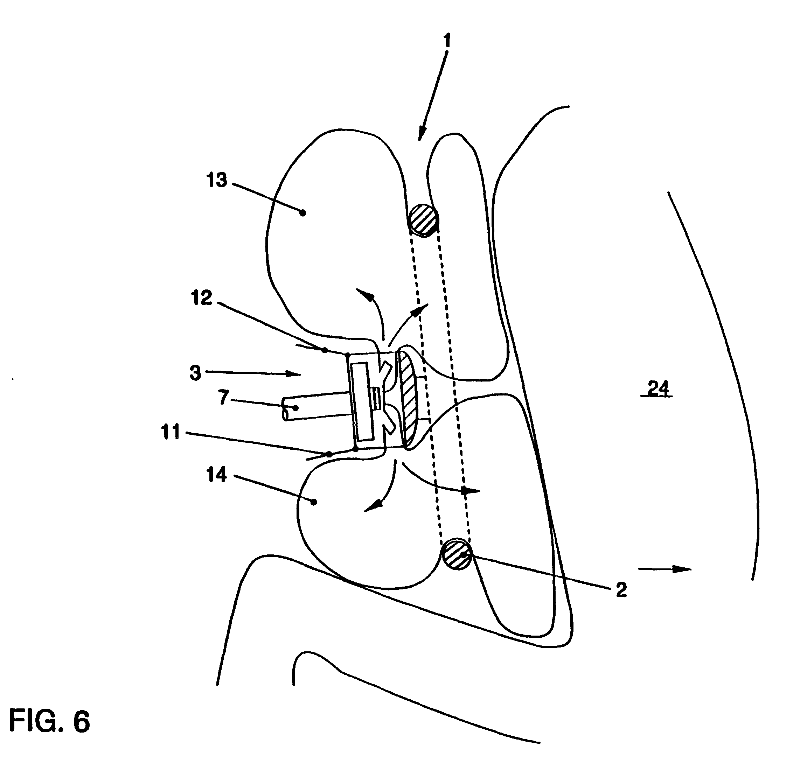

Während in Fig. 2 ein unbehinderter Austritt der Airbags 13, 14 dargestellt ist, zeigt Fig. 6 die Gegebenheiten, wenn ein Fahrzeuglenker 24 zu dicht in einer out of position-Stellung vor dem Lenkrad 1 sitzt und dadurch den Austritt der Airbags 13, 14 behindert. Ersichtlich entfalten sich dabei die Airbags 13, 14 in Richtung des geringsten Widerstands, d. h. nicht nur vor dem Lenkrad 1 sondern teilweise auch dahinter. Damit wird eine mögliche Airbagaggressivität ersichtlich reduziert. Weiter ist auch zu ersehen, daß von den seitlich öffnenden Airbagklappen 11, 12 auch bei einer out of position-Stellung keine Aggressivität für einen Fahrzeuglenker 24 ausgehen kann. Dies ist besonders dadurch begünstigt, daß die Nabe 3 zudem gegenüber dem Kranz 2 vom Fahrzeuglenker 24 weg versetzt liegt bzw. das Lenkrad 1 eine Schüsselung aufweist.

In Fig. 7 ist eine alternative Ausführungsform gezeigt mit einem einteiligen Airbag 23, der ebenfalls zwischen Speichen 5, 6 und einem Lenkradkranz 2 radial ausgehend von der Nabe 3 hindurchgeschossen wird und sich dann entsprechend seiner Faltung und Form vor dem Lenkrad in der dargestellten Weise (wenn keine Behinderung vorliegt) entfaltet. Dem Generator 9 ist hier lediglich ein einfacher Diffusor für den einen Airbag 23 nachgeordnet.

In Fig. 7 a ist eine ähnliche Ausführungsform wie in Fig. 7 dargestellt. Der einzige Unterschied liegt darin, daß sich der Airbag 23 von unten entfaltet. Hierdurch ergibt sich noch eine bessere Abstützung eines Insassen (nicht dargestellt) und es besteht keine Gefahr, daß der Insasse den Airbag 23 zu einem wesentlichen Teil nach oben, über das Lenkrad 1 drückt. Der Airbag 23 kann sich sehr schnell zwischen einem Insassen und dem unteren Teil des Lenkradkranzes 2 ausbreiten. In Fig. 7 a ist zusätzlich eine weitere Speiche 25 gestrichelt angedeutet.

Fig. 7 b zeigt prinziphaft eine ähnliche Ausführungsform wie in Fig. 7 a, jedoch mit nicht aktiviertem Airbag. Zusätzlich ist die Nabe 3 mit einer Abdeckung 35 in Form eines energieabsorbierenden Polsters versehen, was einen gewissen Schutz im Falle einer Multikollision bildet.

In Fig. 8 ist ein für die vorbeschriebene Anordnung geeignetes Zwei-Speichen-Lenkrad 1 dargestellt. Bei der Ausführungsform nach Fig. 7 kann auch ein Drei-Speichen-Lenkrad mit der strichliert eingezeichneten weiteren Speiche 25 verwendet werden, da der dortige Airbag 23 nur oberhalb der Speichen 5, 6 durchtritt.

In den Fig. 9 und 10 sind zudem Vier-Speichen-Lenkräder 26 gezeigt, bei denen jeweils zwei Speichen zur Schaffung großer Airbagdurchtrittsräume eng beieinander liegen. Wenn jeweils zwei eng zusammenliegende Speichen durch eine gemeinsame Verkleidung 27 abgedeckt sind entsteht wiederum der Eindruck eines Zwei-Speichen-Lenkrads.

In den Fig. 11 und 12 ist eine Ausführungsform eines Lenkrads 28 mit einem Speichendreieck dargestellt, wobei vordere Speichen 29, 30 den Lenkradkranz 2 gerade durchgehend verbinden und zudem nach rückwärts gerichtete Speichen 31, 32 zu einem zurückversetzten Airbagmodul 8 führen. Auch ein solches Lenkrad 28 ist im Sinne der vorstehenden Anordnungen verwendbar, wobei ein Oberteil-Airbag 13 und Unterteil-Airbag 14 unfallbedingt um ein zentrales Nabenteil 33 und die vorderen Speichen 29, 30 herumgeschossen wird. Auch die hier verwendeten Airbagklappen 11, 12 haben dabei keinen Kontakt mit einem Fahrzeuglenker, wie dies mit weiteren Einzelheiten aus der Seitendarstellung nach Fig. 13 ersichtlich ist.

In einer weiteren Ausführungsform nach Fig. 14 ist eine ähnliche Anordnung wie in Fig. 7 dargestellt, wobei wiederum ein Zwei-Speichen-Lenkrad 1 (links unten verkleinert dargestellt) verwendet ist. Zudem wird auch hier ein einteiliger Airbag 23 entsprechend Fig. 7 entfaltet. Das Nabenteil ist jedoch hier als an sich bekannter Stülptopf 34 ausgebildet, in den das Airbagmodul 8 mit seitlichen Austrittsmöglichkeiten für den Airbag 23 integriert ist.

In Fig. 15 ist eine Ausführungsform ähnlich Fig. 7 dargestellt, wobei die Klappe 12 über ein Fangband 120 mit definierter Reißkraft gehalten ist. Die Klappe 12 steuert über ihren Öffnungswinkel die Entfaltungsrichtung des Airbags 23. Wenn ein Insasse vor der Lenkung sitzt (OOP), stößt der Airbag 23 auf dieses "Hindernis", wodurch der Druck auf die Klappe 12 steigt und das Fangband 120 reißt. Der Airbag 23 kann sich dann, vom Insassen aus betrachtet, hinter dem Lenkrad 1 entfalten.

### BEZUGSZEICHENLISTE

- 1: Zwei-Speichen-Lenkrad
- 2: Kranz
- 3: Nabe
- 4: Emblem
- 5: Speiche
- 6: Speiche
- 7: Lenksäule
- 8: Airbagmodul
- 9: Generator
- 10: Doppeldiffusor
- 11: Airbagklappe
- 12: Airbagklappe
- 13: Oberteil-Airbag
- 14: Unterteil-Airbag
- 15: Austrittöffnung
- 16: Austrittöffnung
- 17: Bereich
- 18: Bereich
- 19: Überlappungsbereich
- 20: Aufblasöffnung
- 21: Aufblasöffnung
- 22: Reißlinien
- 23: einteiliger Airbag
- 24: Fahrzeuglenker
- 25: Speiche
- 26: Vier-Speichen-Lenkrad
- 27: Verkleidung
- 28: Lenkrad
- 29: vordere Speiche
- 30: vordere Speiche
- 31: rückwärtige Speiche
- 32: rückwärtige Speiche
- 33: Nabenteil
- 34: Stülptopf
- 35: Nabenabdeckung

## Patentansprüche

1. Airbageinrichtung an einem Lenkrad eines Fahrzeugs,
mit einem Airbagmodul (8) das wenigstens einen, durch einen Crashsensor aktivierbaren Gasgenerator (9) mit wenigstens einem Diffusor (10) und wenigstens einem daran angeschlossenen Airbag (13, 14; 23), der zumindest teilweise vor dem Lenkrad (1) entfaltbar ist, sowie wenigstens einer Austrittöffnung (15, 16), wobei das Lenkrad (1) eine Nabe (3), Speichen (5, 6; 25) und einen Kranz (2) aufweist,
wobei
das Airbagmodul (8) mit dem Lenkrad (1) mitdrehend zentral im Bereich der Nabe (3) und/oder der Lenksäule (7) angeordnet ist, und wobei
die wenigstens eine Austrittöffnung (15. 16) am Airbagmodul (8) seitlich und radial gerichtet angebracht ist, **dadurch gekennzeichnet, daß** die Austrittöffnung mittels einer öffenbaren Airbagklappe (11, 12) abgedeckt ist und die zugeordnete Airbagklappe (11, 12) und/oder die Airbagfaltung und/oder die Airbagform so angeordnet und dimensioniert sind, daß der Airbag (13, 14; 23) bei der Entfaltung durch die Austrittöffnung (15, 16) hindurch nach einem anfänglichen radialen Austritt durch den Kranzbereich hindurch in Richtung auf einen Fahrzeuglenker (24) gelenkt wird.

2. Airbageinrichtung nach Anspruch 1, **dadurch gekennzeichnet, daß** die wenigstens eine Airbagklappe (11, 12) nach vorne aufklappbar ist und die Öffnungskinematik so dimensioniert ist, daß die Airbagentfaltung durch den Kranzbereich hindurch in Richtung auf den Fahrzeuglenker (24) gelenkt wird.

3. Airbageinrichtung nach Anspruch 1 oder Anspruch 2, **dadurch gekennzeichnet, daß** ein einziger Airbag (23) vorgesehen ist, der im gefüllten Zustand mit einem radial gerichteten Teilbereich in eine bogenförmige Gestalt übergeht, die den gesamten Lenkradbereich und insbesondere die Nabe (3) abdeckt.

4. Airbageinrichtung nach Anspruch 1 oder Anspruch 2, **dadurch gekennzeichnet, daß** ein Airbagmodul (8) mit wenigstens zwei Airbags (13, 14) mit je einer zugeordneten Austrittöffnung (15, 16) und je einer Airbagklappe (11, 12) vorgesehen ist, wobei vorzugsweise bezogen auf ein geradegestelltes Lenkrad (1) ein Oberteil-Airbag (13) und ein Unterteil-Airbag (14) verwendet sind.

5. Airbageinrichtung nach Anspruch 4, **dadurch gekennzeichnet, daß** sich die wenigstens zwei Airbags (13, 14), vorzugsweise als Oberteil-Airbag (13) und Unterteil-Airbag (14), im entfalteten Zustand vor dem Lenkrad (1) überlappen.

6. Airbageinrichtung nach Anspruch 4 oder Anspruch 5, **dadurch gekennzeichnet, daß** die wenigstens zwei Airbags (13, 14) je an zugeordnete Diffusoren, vorzugsweise einem Doppeldiffusor (10) eines einzigen Gasgenerators (9) angeschlossen sind, der gegebenenfalls als Stufengenerator ausgebildet sein kann.

7. Airbageinrichtung nach einem der Ansprüche 4 bis 6, **dadurch gekennzeichnet, daß** die wenigstens zwei Airbags (13, 14) aus unterschiedlichen Materialien hergestellt sind und/oder mit unterschiedlichen Fülldrücken und/oder zeitversetzt entfaltet werden und/oder der Entfaltungsvorgang entsprechend durch Sensoren erfaßter, individueller Gegebenheiten des Fahrzeuglenkers und des Unfallhergangs steuerbar ist.

8. Airbageinrichtung nach einem der Ansprüche 1 bis 7, **dadurch gekennzeichnet, daß** die gewünschte Entfaltung des wenigstens einen Airbags (13, 14) durch eine unsymmetrische Faltung in der Ausgangslage erreicht wird.

9. Airbageinrichtung nach einem der Ansprüche 1 bis 8, **dadurch gekennzeichnet, daß** das Airbagmodul (8) gegenüber der Kranzebene vom Fahrzeuglenker (24) weg versetzt liegt.

10. Airbageinrichtung nach Anspruch 9, **dadurch gekennzeichnet, daß** der wenigstens eine Airbag (13, 14; 23) zwischen dem Kranz (2) und benachbarten Speichen (5, 6) hindurchtritt.

11. Airbageinrichtung nach einem der Ansprüche 1 bis 10, **dadurch gekennzeichnet, daß** die Nabe (3) als Stülptopf (34) ausgebildet ist, in dem das Airbagmodul (8) integriert ist.

12. Airbageinrichtung nach einem der Ansprüche 1 bis 11, **dadurch gekennzeichnet, daß** die Nabe (3) mit einer energieabsorbierenden Abdeckung (35) versehen ist.

13. Airbageinrichtung nach einem der Ansprüche 1 bis 12, **dadurch gekennzeichnet, daß** wenigstens eine Airbagklappe (11, 12) mit einem Fangband (120) versehen ist.

## Claims

1. Airbag device on a steering wheel of a vehicle, having an airbag module (8) which has at least one gas generator (9) which can be activated by a crash sensor and has at least one diffuser (10), and at least one airbag (13, 14; 23) which is connected to said diffuser and can be at least partially deployed in front of the steering wheel (1), and also at least one outlet opening (15, 16), the steering wheel (1) having a hub (3), spokes (5, 6; 25) and a rim (2), the airbag module (8) being arranged in a manner such that it rotates together with the steering wheel (1) centrally in the region of the hub (3) and/or of the steering column (7), and the at least one outlet opening (15, 16) being provided on the airbag module (8) in a manner such that it is directed laterally and radially, **characterized in that** the outlet opening is covered by means of an airbag flap (11, 12) which can be opened, and the associated airbag flap (11, 12) and/or the airbag folds and/or the airbag shape are arranged and dimensioned in such a manner that, during the deployment through the outlet opening (15, 16), the airbag (13, 14; 23) is directed, after initially emerging radially through the rim region, in the direction of a vehicle driver (24).

2. Airbag device according to Claim 1, **characterized in that** the at least one airbag flap (11, 12) can be opened up forwards and the opening cinematics are dimensioned in such a manner that the airbag deployment is directed through the rim region in the direction of the vehicle driver (24).

3. Airbag device according to Claim 1 or Claim 2, **characterized in that** a single airbag (23) is provided, the said airbag, in the filled state, merging by means of a radially directed sub-region into a curved form which covers the entire steering-wheel region and, in particular, the hub (3).

4. Airbag device according to Claim 1 or Claim 2, **characterized in that** an airbag module (8) having at least two airbags (13, 14) with a respective, associated outlet opening (15, 16) and a respective airbag flap (11, 12) is provided, use preferably being made, in relation to a steering wheel (1) positioned in an upright manner, of an upper-part airbag (13) and a lower-part airbag (14).

5. Airbag device according to Claim 4, **characterized in that** the at least two airbags (13, 14), preferably in the form of an upper-part airbag (13) and lower-part airbag (14), overlap the deployed state in front of the steering wheel (1).

6. Airbag device according to Claim 4 or Claim 5, **characterized in that** the at least two airbags (13, 14) are each connected to associated diffusers, preferably a double diffuser (10) of a single gas generator (9) which can be designed, if appropriate, as a multi-stage generator.

7. Airbag device according to one of Claims 4 to 6, **characterized in that** the at least two airbags (13, 14) are produced from different materials and/or are deployed with different filling pressures and/or offset in terms of time, and/or the deployment process can be controlled in accordance with individual circumstances involving the vehicle driver and the course of the accident which are detected by sensors.

8. Airbag device according to one of Claims 1 to 7, **characterized in that** the desired deployment of the at least one airbag (13, 14) is achieved by the airbag being asymmetrically folded in the starting position.

9. Airbag device according to one of Claims 1 to 8, **characterized in that** the airbag module (8) is situated offset with respect to the plane of the rim away from the vehicle driver (24).

10. Airbag device according to Claim 9, **characterized in that** the at least one airbag (13, 14; 23) passes between the rim (2) and adjacent spokes (5, 6).

11. Airbag device according to one of Claims 1 to 10, **characterized in that** the hub (3) is designed as a slip-on cup (34) in which the airbag module (8) is integrated.

12. Airbag device according to one of Claims 1 to 11, **characterized in that** the hub (3) is provided with an energy-absorbing covering (35).

13. Airbag device according to one of Claims 1 to 12, **characterized in that** at least one airbag flap (11, 12) is provided with an intercepting strap (120).

## Revendications

1. Système de coussin gonflable situé sur le volant d'un véhicule automobile, comportant un module de coussin gonflable (8), comprenant au moins un générateur de gaz (9) activable par un capteur de crash et au moins un diffuseur (10), et au moins un coussin gonflable (13, 14 ; 23) qui lui est raccordé, qui peut se déplier du moins partiellement devant le volant (1), ainsi qu'au moins un orifice de sortie (15, 16), le volant (1) présentant un moyeu (3), des rayons (5, 6 ; 25) et une couronne (2), le module de coussin gonflable (8) tournant avec le volant (1) étant disposé au centre au niveau du moyeu (3) et/ou de la colonne de direction (7) et l'au moins un orifice de sortie (15, 16) étant disposé orienté latéralement et radialement sur le module de coussin gonflable (8), **caractérisé en ce que** l'orifice de sortie est recouvert par une trappe de coussin gonflable (11, 12) pouvant s'ouvrir et que la trappe de coussin gonflable associée (11, 12) et/ou le pliage du coussin gonflable et/ou la forme du coussin gonflable sont disposés et dimensionnés de manière à ce que le coussin gonflable (13, 14 ; 23) soit dirigé, lors du dépliement à travers l'orifice de sortie (15, 16), après une sortie radiale initiale à travers la zone de la couronne, en direction d'un conducteur de véhicule (24).

2. Système de coussin gonflable selon la revendication 1, **caractérisé en ce que** l'au moins une trappe de coussin gonflable (11, 12) peut s'ouvrir vers l'avant et que la cinématique d'ouverture est dimensionnée de manière à ce que le pliage du coussin gonflable soit dirigé à travers la zone de la couronne en direction du conducteur du véhicule (24).

3. Système de coussin gonflable selon la revendication 1 ou la revendication 2, **caractérisé en ce qu'**il est prévu un seul coussin gonflable (23) qui se continue, à l'état rempli, par une zone partielle orientée radialement, en une forme en arc de cercle qui recouvre toute la zone du volant et notamment le moyeu (3).

4. Système de coussin gonflable selon la revendication 1 ou la revendication 2, **caractérisé en ce qu'**il est prévu un module de coussin gonflable (8) comportant au moins deux coussins gonflables (13, 14) comprenant chacun un orifice de sortie associé (15, 16) et chacun une trappe de coussin gonflable (11, 12), un coussin gonflable de partie supérieure (13) et un coussin gonflable de partie inférieure (14) étant utilisés de préférence en relation avec un volant positionné droit (1).

5. Système de coussin gonflable selon la revendication 4, **caractérisé en ce que** les au moins deux coussins gonflables (13, 14) se chevauchent devant le volant (1), à l'état déplié, de préférence sous forme d'un coussin gonflable de partie supérieure (13) et d'un coussin gonflable de partie inférieure (14).

6. Système de coussin gonflable selon la revendication 4 ou la revendication 5, **caractérisé en ce que** les au moins deux coussins gonflables (13, 14) sont raccordés chacun à des diffuseurs associés, de préférence un double diffuseur (10) d'un seul générateur de gaz (9), qui peut le cas échéant se présenter sous forme d'un générateur graduel.

7. Système de coussin gonflable selon l'une quelconque des revendications 4 à 6, **caractérisé en ce que** les au moins deux coussins gonflables (13, 14) sont fabriqués dans des matériaux différents et/ou se déplient à des pressions de gonflage différentes et/ou avec un décalage dans le temps et/ou que le processus de dépliement est contrôlable en fonction de données individuelles du conducteur du véhicule et des circonstances de l'accident enregistrées par des capteurs.

8. Système de coussin gonflable selon l'une quelconque des revendications 1 à 7, **caractérisé en ce que** le dépliement souhaité de l'au moins un coussin gonflable (13, 14) est obtenu grâce à un pliage asymétrique en position de départ.

9. Système de coussin gonflable selon l'une quelconque des revendications 1 à 8, **caractérisé en ce que** le module de coussin gonflable (8) est situé avec un décalage par rapport au conducteur du véhicule (24) en face du plan de la couronne.

10. Système de coussin gonflable selon la revendication 9, **caractérisé en ce que** l'au moins un coussin gonflable (13, 14 ; 23) traverse entre la couronne (2) et les rayons voisins (5, 6).

11. Système de coussin gonflable selon l'une quelconque des revendications 1 à 10, **caractérisé en ce que** le moyeu (3) est réalisé sous forme d'un plateau embouti par retournement (34), dans lequel est intégré le module de coussin gonflable (8).

12. Système de coussin gonflable selon l'une quelconque des revendications 1 à 11, **caractérisé en ce que** le moyeu (3) est équipé d'un recouvrement (35) absorbant l'énergie.

13. Système de coussin gonflable selon l'une quelconque des revendications 1 à 12, **caractérisé en ce qu'**au moins une trappe de coussin gonflable (11, 12) est équipée d'une bande de retenue (120).
